# EUROPEAN PATENT APPLICATION

(11) **EP 1 139 441 A1**
(43) Date of publication of application: **04.10.2001**
(21) Application number: 00106976.4
(22) Date of filing: 01.04.2000
(51) Int. Cl.: H01L 41/04, F02D 41/20, F02M 51/06

(54) **Method and apparatus for controlling system parameters, particularly in fuel injection systems**

(71) Applicant: Robert Bosch GmbH, 70469 Stuttgart (DE)
(72) Inventor: Rueger, Johannes-Joerg, 71665 Vaihingen/Enz (DE); Schulz, Udo, 71665 Vaihingen/Enz (DE)
(74) Representative: Dreiss, Fuhlendorf, Steimle & Becker

(57) **Abstract**

A method and an apparatus for controlling system parameters, particularly in fuel injection systems are described. The method is characterized in that first system parameters, in particular voltages across piezoelectric elements, are modified by modification means corresponding to predefined target values. The target values are calculated by calculation means in accordance with both the desired action of each controlled element, in particular any desired extension of each piezoelectric element, as well as with further system parameters on which the target values depend. The time required to finish the modification of the first system parameters varies for homogenous actions corresponding to the dependence of the target values on the further system parameters. Resulting time differences are taken into account and compensated for by correction means. The apparatus is characterized by corresponding modification, calculation and correction means.

## Description

The present invention concerns a method as defined in the preamble of claim 1 and an apparatus as defined in the preamble of claim 8, i.e., a method and an apparatus for controlling system parameters, particularly in fuel injection systems.

Fuel injection systems are essential components of internal combustion engines. They may be implemented either with individual or with shared fuel supply lines for each fuel injection nozzle (the second alternative is also referred to as common rail systems, "CR systems"). In each case, fuel injections are controlled by means of opening and closing fuel injection nozzles in a predefined way.

As an example, piezoelectric elements may be used as actuators in fuel injection nozzles (in particular in common rail injectors) of an internal combustion engine. In this example, fuel injection is controlled by means of applying voltages to piezoelectric actuators which expand or contract themselves as a function of the voltage applied. An injector needle which is connected to the piezoelectric actuators by means of a transfer system is moved up and down; thus an injèction nozzle can be opened and closed. A more detailed description of a corresponding system can be found in German Patent Application No. 197 14 616, herein incorporated by reference.

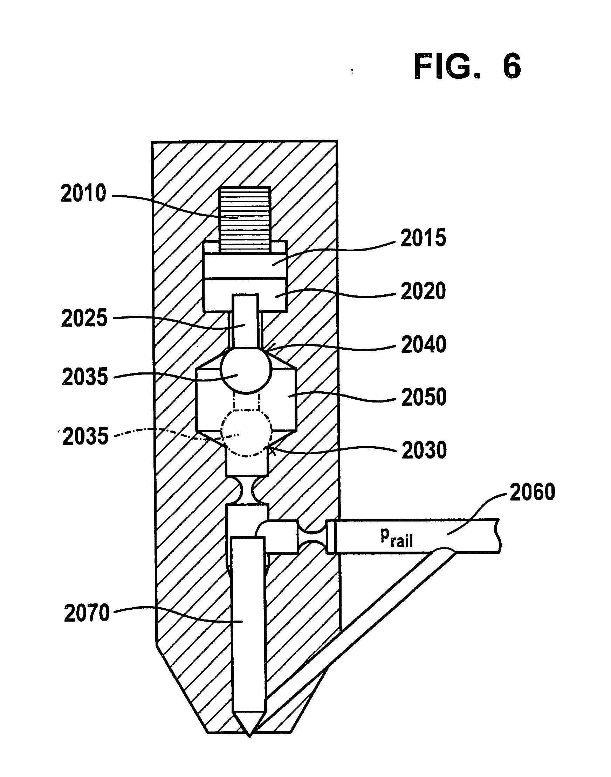

Fig. 6 is a schematic representation of a fuel injection system using a piezoelectric element 2010 as an actuator. Referring to Fig. 6, the piezoelectric element 2010 is electrically energized to expand and contract in response to a given activation voltage. The piezoelectric element 2010 is coupled to a piston 2015. In the expanded state, the piezoelectric element 2010 causes the piston 2015 to protrude into a hydraulic adapter 2020 which contains a hydraulic fluid, for example fuel. As a result of the piezoelectric element's expansion, a double acting control valve 2025 is hydraulically pushed away from hydraulic adapter 2020 and the valve plug 2035 is extended away from a first closed position 2040. The combination of double acting control valve 2025 and hollow bore 2050 is often referred to as double acting, double seat valve for the reason that when piezoelectric element 2010 is in an unexcited state, the double acting control valve 2025 rests in its first closed position 2040. On the other hand, when the piezoelectric element 2010 is fully extended, it rests in its second closed position 2030. The later position of valve plug 2035 is schematically represented with ghost lines in Fig. 6.

The fuel injection system comprises an injection needle 2070 allowing for injection of fuel from a pressurized fuel supply line 2060 into the cylinder (not shown). When the piezoelectric element 2010 is unexcited or when it is fully extended, the double acting control valve 2025 rests respectively in its first closed position 2040 or in its second closed position 2030. In either case, the hydraulic rail pressure maintains injection needle 2070 at a closed position. Thus, the fuel mixture does not enter into the cylinder (not shown). Conversely, when the piezoelectric element 2010 is excited such that double acting control valve 2025 is in the so-called mid-position with respect to the hollow bore 2050, then there is a pressure drop in the pressurized fuel supply line 2060. This pressure drop results in a pressure differential in the pressurized fuel supply line 2060 between the top and the bottom of the injection needle 2070 so that the injection needle 2070 is lifted allowing for fuel injection into the cylinder (not shown).

The use of piezoelectric elements as actuators proves to be advantageous, inter alia, in fuel injection nozzles for internal combustion engines. Reference is made and herein incorporated by reference, for example, to European Patent Application Nos. 0 371 469 B1 and 0 379 182 B1 regarding the usability of piezoelectric elements in fuel injection nozzles.

German Patent Application Nos. 197 42 073 A1 and 197 29 844 A1, which are described below and are incorporated herein by reference in their entirety, disclose piezoelectric elements with double acting, double seat valves or double acting control valves for controlling injection needles in a fuel injection system.

Within CR systems as well as in other control systems with piezoelectric elements as actuators high accuracy of system performance is required. However, there are a variety of system properties such as variations of the fuel pressure which render it difficult to achieve efficient and accurate system operation.

An object of the present invention to provide an improved method and apparatus for controlling system parameters in a system and in particular in fuel injection systems. This is achieved by the method of claim 1, i.e., a method for controlling system parameters, particularly in fuel injection systems, characterized in that first system parameters, in particular voltages across piezoelectric elements, are modified by modification means corresponding to predefined target values. The target values are calculated by calculation means in accordance with both the desired action of each controlled element, in particular any desired extension of each piezoelectric element, as well as with further system parameters on which the target values depend. The time required to finish the modification of the first system parameters, i.e., to apply a certain voltage to a piezoelectric element, varies for homogenous actions corresponding to the dependence of the target values on the further system parameters. Any resulting time differences are taken into account and compensated for by a correction means.

In this application, the term "homogenous actions" is used to refer to actions of a piezoelectric element, which are in principle the same (for example opening a double acting control valve from a first closed position); but can vary in detail due to dependencies on parameters, e.g., manufacturing differences.

The present invention further provides an apparatus, as claimed in claim 8, i.e., an apparatus for controlling system parameters, particularly in fuel injection systems and in particular use with the method of the present invention of claim 1 and subsequent claims, characterized in that modification means are implemented for modifying first system parameters, in particular voltages across piezoelectric elements, corresponding to predefined target values. Calculation means are implemented for the calculation of target values in accordance with both the desired action of each controlled element, in particular any desired extension of each piezoelectric element, as well as with further system parameters on which the target values depend. Correction means are implemented in order to take into account and compensate for resulting time differences regarding the time required to finish the modification of the first system parameters which varies for homogenous actions corresponding to the dependence of the target values on the further system parameters.

Hence, the present invention can achieve not only high accuracy in terms of volume, i.e., the volume of the injected fuel, but also in terms of timing.

Preferably, piezoelectric elements are used as actuators in fuel injection nozzles of a fuel injection system. The first system parameters correspond to the voltages across the piezoelectric elements. And the target values correspond to target voltages across the piezoelectric elements.

The present invention can be applied to, be used in, and/or made a part of other applicable control systems.

In a further preferred implementation or embodiment of the present invention, some of the system parameters comprise the fuel pressure and the temperature. By taking those system parameters into account, a higher precision and accuracy of the system can be achieved.

Advantageously, the modification time for system parameters can be predetermined in correspondence with each target value by the correction means and the onset of each modification is adjusted hereto by the correction means in order to finish the modification at a predefined time.

As an example, within a fuel injection system with piezoelectric elements as actuators, the time period between the onset of the activation of any particular piezoelectric element and the attainment of the target voltage (and the corresponding injection event) generally differs even for homogenous actions. Thus, the injection event is shifted with respect to the onset of activation by a time that depends on the operating point. And, the amount of fuel injected into the cylinder can vary. Taking into account a fixed time delay between the attainment of the target voltage and the onset of the injection, a resulting more or less inexact point in time for the injection onset. Hence, the implementation of an embodiment or implementation of the present invention can lead to a more accurate performance of the system in terms of time.

In a further embodiment of the present invention, the modification gradient of first system parameter versus the time (dU/dt)is assumed to be constant or at least known in advance of each modification.

The delay between the modification onset and the termination of the modification procedure depends on various parameters. It is ultimately a function of the target voltage and the modification gradient (voltage). The activation voltage gradient can be assumed, to a first approximation, to be constant, or at least known in advance of the modification. Hence, a corresponding assumption simplifies the determination of the resulting time delay, but, however, still leads to sufficiently precise results.

Preferably, the modification time for the second system parameter is predetermined by means of division of the voltage difference between the corresponding initial voltage and the target value by the modification gradient (dU/dt).

This allows an easy determination of the modification time with sufficient precision.

In another further embodiment or implementation of the present invention, several modification gradients are provided for several modification procedures. This can allow a potentially easy determination of further dependencies of the voltages than just the dependence on time.

The invention will be explained below in more detail with reference to exemplary embodiments, referring to the figures in which:
- Fig. 1: shows a graph illustrating the general approach of the present invention;
- Fig. 2: shows a block diagram of an exemplary embodiment of an arrangement in which the present invention is implemented resp. which can be utilized for an application of the inventive method;
- Fig. 3a: shows a depiction to explain the conditions occurring during a first charging phase (charging switch 220 closed) in the circuit of Fig. 2;
- Fig. 3b: shows a depiction to explain the conditions occurring during a second charging phase (charging switch 220 open again) in the circuit of Fig. 2;
- Fig. 3c: shows a depiction to explain the conditions occurring during a first discharging phase (discharging switch 230 closed) in the circuit of Fig. 2;
- Fig. 3d: shows a depiction to explain the conditions occurring during a second discharging phase (discharging switch 230 open again) in the circuit of Fig. 2;
- Fig. 4: shows a block diagram of components of the activation IC E which is also shown in Fig. 2;
- Fig. 5: shows a depiction of further details of the invention; and
- Fig. 6: shows a schematic representation of a fuel injection system using a piezoelectric element as an actuator.

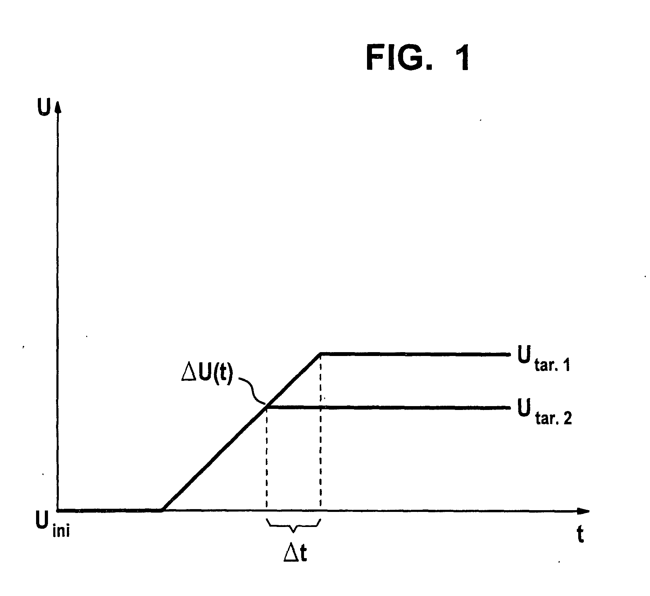

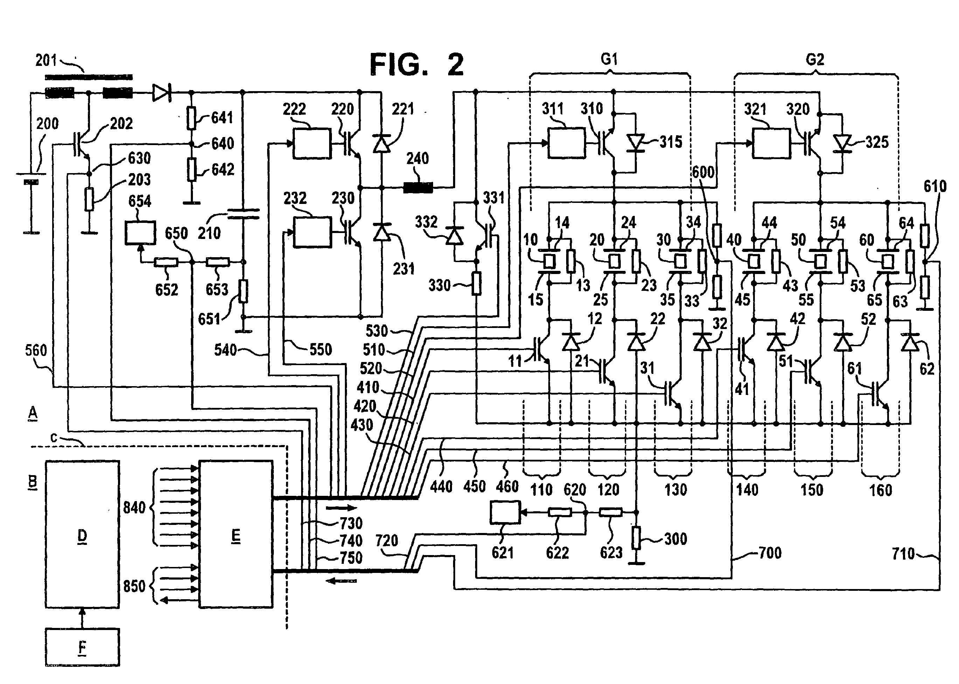

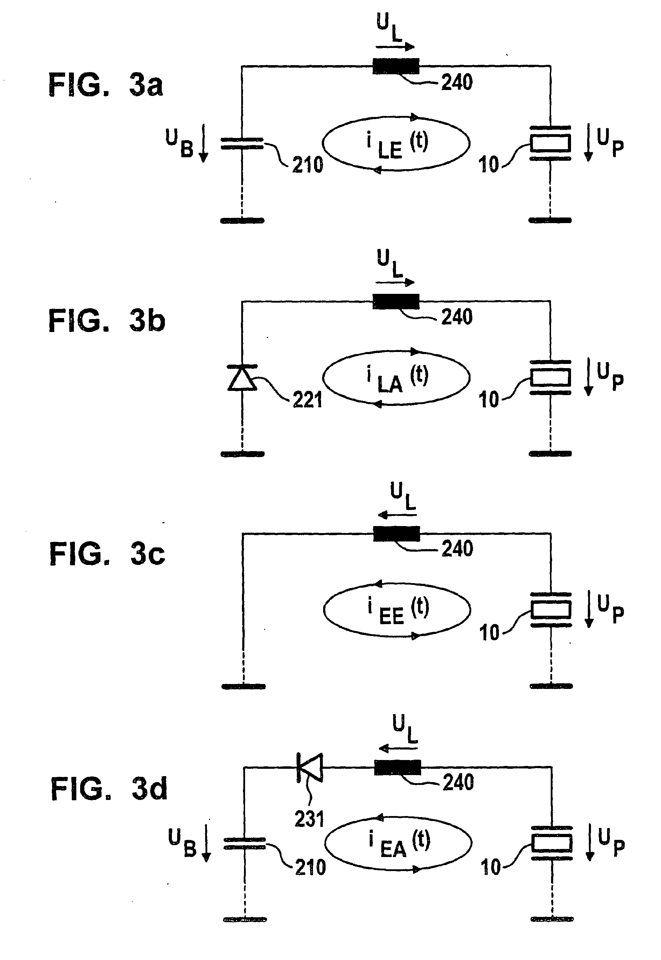

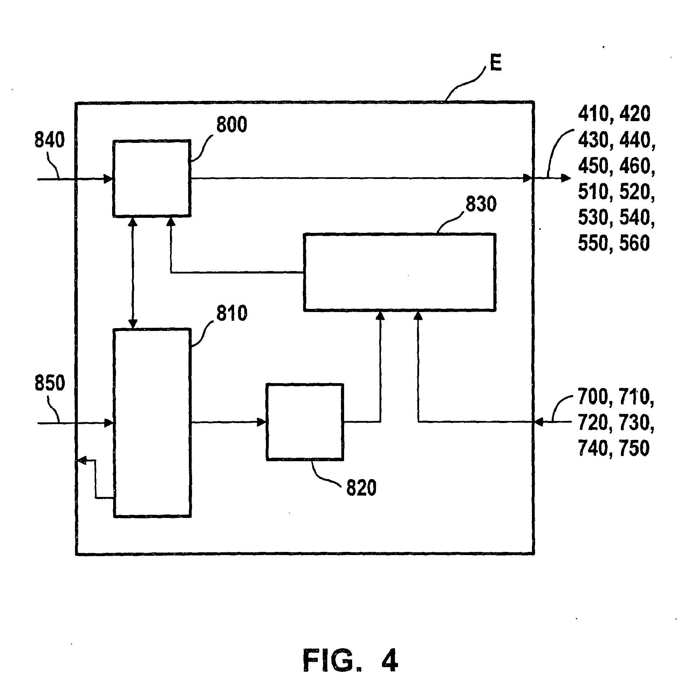

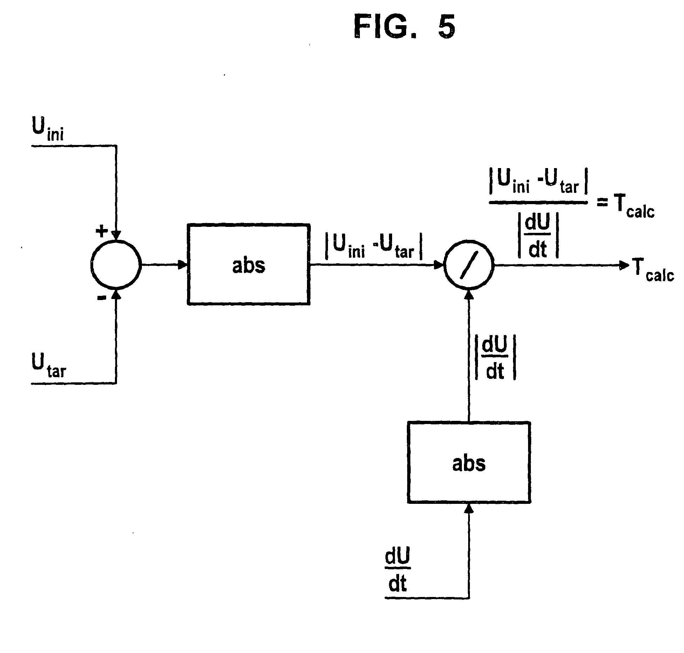

The following description introduces the general approach of the present invention while referring to Fig. 1. Then, in order to allow a better understanding thereof, a general environment in which the inventive method and apparatus may be implemented is described and therefore the individual elements in Fig. 2 are introduced. Then, the procedures of charging and discharging piezoelectric elements 10, 20, 30, 40, 50, and/or 60 (see Fig. 2) are described in general, while additionally referring to Figs. 3a through 3d. Next, the manner(s) in which charging and discharging are controlled by means of control unit D and activation IC E is explained in more detail, while referring to Figs. 2 and 4. Next, it is described how the exemplary control system is driven in accordance with the present invention, while further referring to Figs. 1 and 5. Fig. 6 is described earlier in this application.

Within Fig.1, two target values U_{tar,1} and U_{tar,2} for the voltages across a piezoelectric element 10, 20, 30, 40, 50, and/or 60 (see Fig.2) are depicted as horizontal lines, i.e., as fixed voltages over the time, within a voltage-versus-time diagram. Furthermore, an initial voltage Uᵢₙᵢ is depicted as a horizontal base line of the diagram. Moreover, charging procedures for the charging of the piezoelectric element 10, 20, 30, 40, 50 or 60 from the initial voltage Uᵢₙᵢ to each of the target voltages U_{tar,1} or U_{tar,2} are depicted by means of a "voltage as a function of the time" curve U(t). For simplicity, in Fig. 1, the gradient dU/dt of the curve is assumed to be constant. In general, this gradient can vary. Finally, since the target voltages U_{tar,1} and U_{tar,2} and the gradients may differ, the time required for the corresponding charging procedures differs by a time difference Δt. The reasons, why there are different charging procedures and why there are significant time differences according to different target values is explained in further detail below, while referring to Figs. 2 through 4.

In Fig. 2, there is a detailed area A and a non-detailed area B, the separation of which is indicated by a dashed line c. The detailed area A comprises a circuit for charging and discharging piezoelectric elements 10, 20, 30, 40, 50 and/or 60. In the example being considered, these piezoelectric elements 10, 20, 30, 40, 50 and/or 60 are actuators in fuel injection nozzles (in particular in so-called common rail injectors) of an internal combustion engine. Piezoelectric elements can be used for such purposes because, as is known, they possess the property of contracting or expanding as a function of a voltage applied thereto or occurring therein. The non-detailed area B comprises a control unit D and an activation IC E by both of which the elements within the detailed area A are controlled. Further, measuring unit F is connected to control unit D and is used for measuring such things as rail pressure, temperature, etc. as needed by the present invention.

As mentioned above, the circuit within the detailed area A comprises six piezoelectric elements 10, 20, 30, 40, 50 and/or 60. The reason to take six piezoelectric elements 10, 20, 30, 40, 50 and/or 60 in the embodiment described is to independently control six cylinders within a combustion engine; hence, any other number of piezoelectric elements might match any other purpose.

The piezoelectric elements 10, 20, 30, 40, 50 and/or 60 are distributed into a first group G1 and a second group G2, each comprising three piezoelectric elements, e.g., piezoelectric elements 10, 20 and 30 in the first group G1 resp. 40, 50 and 60 in the second group G2. Groups G1 and G2 are constituents of circuit parts connected in parallel with one another. Group selector switches 310, 320 can be used to establish which of the groups G1, G2 of piezoelectric elements 10, 20 and 30 resp. 40, 50 and 60 will be discharged in each case by a common charging and discharging apparatus. However, the group selector switches 310, 320 in particular embodiments can be seen as essentially meaningless for charging procedures.

The group selector switches 310, 320 are arranged between a coil 240 and the respective groups G1 and G2 (the coil-side terminals thereof) and are implemented as transistors. Side drivers 311, 321 are implemented which transform control signals received from the activation IC E into voltages which are eligible for closing and opening the switches as required.

Diodes 315 and 325 (referred to as group selector diodes), respectively, are provided in parallel with the group selector switches 310, 320. If the group selector switches 310, 320 are implemented as MOSFETs or IGBTs for example, group selector diodes 315, 325 can be constituted by the parasitic diodes themselves. The diodes 315, 325 bypass the group selector switches 310, 320 during charging procedures. Hence, the functionality of the group selector switches 310, 320 is reduced to select a group G1, G2 of piezoelectric elements 10, 20 and 30, resp. 40, 50 and 60 for a discharging procedure only.

Within each group G1 resp. G2 the piezoelectric elements 10, 20 and 30, resp. 40, 50 and 60 are arranged as constituents of piezo branches 110, 120 and 130 (group G1) and 140, 150 and 160 (group G2) that are connected in parallel. Each piezo branch comprises a series circuit made up of a first parallel circuit comprising a piezoelectric element 10, 20, 30, 40, 50 resp. 60 and a resistor 13, 23, 33, 43, 53 resp. 63 (referred to as branch resistors) and a second parallel circuit made up of a selector switch implemented as a transistor 11, 21, 31, 41, 51 resp. 61 (referred to as branch selector switches) and a diode 12, 22, 32, 42, 52 resp. 62 (referred to as branch diodes).

The branch resistors 13, 23, 33, 43, 53 resp. 63 cause each corresponding piezoelectric element 10, 20, 30, 40, 50 resp. 60 during and after a charging procedure to continuously discharge themselves, since they connect both terminals of each capacitive piezoelectric element 10, 20, 30, 40, 50, resp. 60 one to another. However, the branch resistors 13, 23, 33, 43, 53 resp. 63 are sufficiently large to make this procedure slow compared to the controlled charging and discharging procedures as described below. Hence, it is still a reasonable assumption to consider the charge of any piezoelectric element 10, 20, 30, 40, 50 or 60 as unchanging within a relevant time after a charging procedure (the reason to nevertheless implement the branch resistors 13, 23, 33, 43, 53 and 63 is to avoid remaining charges on the piezoelectric elements 10, 20, 30, 40, 50 and 60 in case of a breakdown of the system or other exceptional situations). Hence, the branch resistors 13, 23, 33, 43, 53 and 63 may be neglected in the following description.

The branch selector switch/branch diode pairs in the individual piezo branches 110, 120, 130, 140, 150 resp. 160, i.e. selector switch 11 and diode 12 in piezo branch 110, selector switch 21 and diode 22 in piezo branch 120, and so on, can be implemented using electronic switches (i.e. transistors) with parasitic diodes, for example MOSFETs or IGBTs (as stated above for the group selector switch/diode pairs 310 and 315 resp. 320 and 325).

The branch selector switches 11, 21, 31, 41, 51 resp. 61 can be used to establish which of the piezoelectric elements 10, 20, 30, 40, 50 or 60 will be charged in each case by a common charging and discharging apparatus: in each case, the piezoelectric elements 10, 20, 30, 40, 50 or 60 that are charged are all those whose branch selector switches 11, 21, 31, 41, 51 and/or 61 are closed during the charging procedure.

Usually at any time only one of the branch selector switches, e.g., 11, 21, 31, 41, 51, and/or 61, is closed. In the case of the branch selector switches 11, 21, 31, 41, 51 and/or 61, each transistor emitter is connected to ground (via resistor 300).

The branch diodes 12, 22, 32, 42, 52 and/or 62 serve for bypassing the branch selector switches 11, 21, 31, 41, 51 resp. 61 during discharging procedures. Hence, in the example considered for charging procedures any individual piezoelectric element can be selected, whereas for discharging procedures either the first group G1 or the second group G2 of piezoelectric elements 10, 20 and 30 resp. 40, 50 and 60 or both have to be selected.

Returning to the piezoelectric elements 10, 20, 30, 40, 50 and/or 60 themselves, the branch selector piezo terminals resp. 15, 25, 35, 45, 55 and/or 65 may be connected to ground either through the branch selector switches 11, 21, 31, 41, 51 resp. 61 or through the corresponding diodes 12, 22, 32, 42, 52 resp. 62 and in both cases additionally through resistor 300.

Resistor 300 can aid in measurement of the currents that flow during charging and discharging of the piezoelectric elements 10, 20, 30, 40, 50 and/or 60 between the branch selector piezo terminals 15, 25, 35, 45, 55 resp. 65 and the ground. A knowledge of these currents allows a controlled charging and discharging of the piezoelectric elements 10, 20, 30, 40, 50 and 60. In particular, by closing and opening charging switch 220 and discharging switch 230 in a manner dependent on the magnitude of the currents, it is possible to set the charging current and discharging current to predefined average values and/or to keep them from exceeding or falling below predefined maximum and/or minimum values.

In the example considered, the measurement itself further can requires a voltage source 621 which supplies a voltage of 5 V DC, for example, and a voltage divider implemented as two resistors 622 and 623. This is in order to prevent the activation IC E (by which the measurements are performed) from negative voltages which might otherwise occur on measuring point 620 and which cannot be handled by means of activation IC E. It is possible that such negative voltages are changed into positive voltages by means of addition with a positive voltage setup which is supplied by said voltage source 621 and voltage divider resistors 622, 623.

The other terminal of each piezoelectric element 10, 20, 30, 40, 50 and/or 60, i.e. the group selector piezo terminal resp. 14, 24, 34, 44, 54 and/or 64, may be connected to the plus or positive pole of a voltage source via the group selector switch 310 resp. 320 or via the group selector diode 315 resp. 325 as well as via a coil 240 and a parallel circuit made up of a charging switch 220 and a charging diode 221, and alternatively or additionally connected to ground via the group selector switch 310 resp. 320 or via diode 315 resp. 325 as well as via the coil 240 and a parallel circuit made up of a discharging switch 230 or a discharging diode 231. Charging switch 220 and discharging switch 230 are implemented as transistors, for example, which are controlled via side drivers 222 resp. 232.

The voltage source comprises an element having capacitive properties which, in the example being considered, can include the (buffer) capacitor 210. Capacitor 210 is charged by a battery 200 (for example a motor vehicle battery) and a DC voltage converter 201 downstream therefrom. DC voltage converter 201 converts the battery voltage (for example, 12 V) into substantially any other DC voltage (for example, 250 V), and charges capacitor 210 to that voltage. DC voltage converter 201 is controlled by means of transistor switch 202 and resistor 203 which is utilized for current measurements taken from a measuring point 630.

For cross check purposes, a further current measurement at a measuring point 650 can be made by activation IC E as well as by resistors 651, 652 and 653 and a 5 V DC voltage source 654, for example; moreover, a voltage measurement at a measuring point 640 is allowed by activation IC E as well as by voltage dividing resistors 641 and 642.

A resistor 330 (referred to as total discharging resistor), a stop switch implemented as a transistor 331 (referred to as stop switch), and a diode 332 (referred to as total discharging diode) can serve to discharge the piezoelectric elements 10, 20, 30, 40, 50 and/or 60 (if they happen to be not discharged by the "normal" discharging operation as described further below). Stop switch 331 is preferably closed after "normal" discharging procedures (cycled discharging via discharge switch 230). It thereby can connect piezoelectric elements 10, 20, 30, 40, 50 and/or 60 to ground through resistors 330, 300 and thus can remove any residual charges that might remain in piezoelectric elements 10, 20, 30, 40, 50 and/or 60. The total discharging diode 332 prevents negative voltages from occurring at the piezoelectric elements 10, 20, 30, 40, 50 and/or 60, which might in some circumstances be damaged thereby.

Charging and discharging of all the piezoelectric elements 10, 20, 30, 40, 50 and/or 60 or any particular one is accomplished by way of a single charging and discharging apparatus (common to all the groups and their piezoelectric elements). The common charging and discharging apparatus comprises battery 200, DC voltage converter 201, capacitor 210, charging switch 220 and discharging switch 230, charging diode 221 and discharging diode 231 and coil 240.

The charging and discharging of each piezoelectric element works the same way and is explained in the following while referring to the first piezoelectric element 10 only.

The conditions occurring during the charging and discharging procedures are explained with reference to Figs. 3a through 3d, of which Figs. 3a and 3b illustrate the charging of piezoelectric element 10, and Figs. 3c and 3d the discharging of piezoelectric element 10.

The selection of one or more particular piezoelectric elements 10, 20, 30, 40, 50 and/or 60 to be charged or discharged, the charging procedure as described in the following as well as the discharging procedure are driven by activation IC E and control unit D by means of opening or closing one or more of the above introduced switches 11, 21, 31, 41, 51, and/or 61; 310, 320; 220, 230 and 331. The interactions between the elements within the detailed area A and activation IC E and control unit D are described in detail further below.

Concerning the charging procedure, first any particular piezoelectric element 10, 20, 30, 40, 50 and/or 60 which is to be charged has to be selected. In order to exclusively charge the first piezoelectric element 10, the branch selector switch 11 of the first branch 110 is closed, whereas all other branch selector switches 21, 31, 41, 51 and/or 61 remain opened. In order to exclusively charge any other piezoelectric element 20, 30, 40, 50 and/or 60 or in order to charge several ones at the same time they would be selected by closing the corresponding branch selector switches 21, 31, 41, 51 and/or 61.

Then, the charging procedure itself may take place:

Generally, within the example considered, the charging procedure may require a positive potential difference between capacitor 210 and the group selector piezo terminal 14 of the first piezoelectric element 10. However, as long as charging switch 220 and discharging switch 230 are open, no charging or discharging of piezoelectric element 10 occurs: In this state, the circuit shown in Fig. 2 is in a steady-state condition, i.e., piezoelectric element 10 retains its charge state in substantially unchanged fashion, and no currents flow.

In order to charge the first piezoelectric element 10, charging switch 220 is closed. Theoretically, the first piezoelectric element 10 could become charged just by doing so. However, this would produce large currents which might damage the elements involved. Therefore, the occurring currents are measured at measuring point 620 and switch 220 is opened again as soon as the detected currents exceed a certain limit. Hence, in order to achieve any desired charge on the first piezoelectric element 10, charging switch 220 is repeatedly closed and opened whereas discharging switch 230 remains open.

In more detail, when charging switch 220 is closed, the conditions shown in Fig. 3a occur, i.e., a closed circuit comprising a series circuit made up of piezoelectric element 10, capacitor 210, and coil 240 is formed, in which a current i_{LE}(t) flows as indicated by arrows in Fig. 3a. As a result of this current flow both positive charges are brought to the group selector piezo terminal 14 of the first piezoelectric element 10 and energy is stored in coil 240.

When charging switch 220 opens shortly (for example, a few *µ*s) after it has closed, the conditions shown in Fig. 3b occur: a closed circuit comprising a series circuit made up of piezoelectric element 10, charging diode 221, and coil 240 is formed, in which a current i_{LA}(t) flows as indicated by arrows in Fig. 3b. The result of this current flow is that energy stored in coil 240 flows into piezoelectric element 10. Corresponding to the energy delivery to the piezoelectric element 10, the voltage occurring in the latter, and its external dimensions, increase. Once energy transport has taken place from coil 240 to piezoelectric element 10, the steady-state condition of the circuit, as shown in Fig. 2 and already described, is once again attained.

At that time, or earlier, or later (depending on the desired time profile of the charging operation), charging switch 220 is once again closed and opened again, so that the processes described above are repeated. As a result of the re-closing and re-opening of charging switch 220, the energy stored in piezoelectric element 10 increases (the energy already stored in the piezoelectric element 10 and the newly delivered energy are added together), and the voltage occurring at the piezoelectric element 10, and its external dimensions, accordingly increase.

If the aforementioned closing and opening of charging switch 220 are repeated numerous times, the voltage occurring at the piezoelectric element 10, and the expansion of the piezoelectric element 10, rise in steps.

Once charging switch 220 has closed and opened a predefined number of times, and/or once piezoelectric element 10 has reached the desired charge state, charging of the piezoelectric element is terminated by leaving charging switch 220 open.

Concerning the discharging procedure, in the example considered, the piezoelectric elements 10, 20, 30, 40, 50 and 60 are discharged in groups (G1 and/or G2) as follows:

Firstly, the group selector switch(es) 310 and/or 320 of the group or groups G1 and/or G2 the piezoelectric elements of which are to be discharged are closed (the branch selector switches 11, 21, 31, 41, 51, 61 do not affect the selection of piezoelectric elements 10, 20, 30, 40, 50, 60 for the discharging procedure, since in this case they are bypassed by the branch diodes 12, 22, 32, 42, 52 and 62). Hence, in order to discharge piezoelectric element 10 as a part of the first group Gl, the first group selector switch 310 is closed.

When discharging switch 230 is closed, the conditions shown in Fig. 3c occur: a closed circuit comprising a series circuit made up of piezoelectric element 10 and coil 240 is formed, in which a current i_{EE}(t) flows as indicated by arrows in Fig. 3c. The result of this current flow is that the energy (a portion thereof) stored in the piezoelectric element is transported into coil 240. Corresponding to the energy transfer from piezoelectric element 10 to coil 240, the voltage occurring at the piezoelectric element 10, and its external dimensions, may decrease.

When discharging switch 230 opens shortly (for example, a few *µ*s) after it has closed, the conditions shown in Fig. 3d occur: a closed circuit comprising a series circuit made up of piezoelectric element 10, capacitor 210, discharging diode 231, and coil 240 can be formed, in which a current i_{EA}(t) flows as indicated by arrows in Fig. 3d. The result of this current flow is that energy stored in coil 240 is fed back into capacitor 210. Once energy transport has taken place from coil 240 to capacitor 210, the steady-state condition of the circuit, as shown in Fig. 2 and already described, can be once again attained.

At that time, or earlier, or later (depending on the desired time profile of the discharging operation), discharging switch 230 is once again closed and opened again, so that the processes described above are repeated. As a result of the re-closing and re-opening of discharging switch 230, the energy stored in piezoelectric element 10 can decrease further, and the voltage occurring at the piezoelectric element, and its external dimensions, also accordingly can decrease.

If the aforementioned closing and opening of discharging switch 230 are repeated numerous times, the voltage occurring at the piezoelectric element 10, and the expansion of the piezoelectric element 10, can decrease in steps.

Once discharging switch 230 has closed and opened a predefined number of times, and/or once the piezoelectric element has reached the desired discharge state, discharging of the piezoelectric element 10 is terminated by leaving discharging switch 230 open.

The interaction between activation IC E and control unit D on the one hand and the elements within the detailed area A on the other hand is performed by control signals sent from activation IC E to elements within the detailed area A via branch selector control lines 410, 420, 430, 440, 450, 460, group selector control lines 510, 520, stop switch control line 530, charging switch control line 540 and discharging switch control line 550 and control line 560. On the other hand, there are sensor signals obtained on measuring points 600, 610, 620, 630, 640, 650 within the detailed area A which are transmitted to activation IC E via sensor lines 700, 710, 720, 730, 740, 750.

The control lines can be used to apply or not to apply voltages to the transistor bases in order to select piezoelectric elements 10, 20, 30, 40, 50 and/or 60, to perform charging or discharging procedures of single or several piezoelectric elements 10, 20, 30, 40, 50, and/or 60 by means of opening and closing the corresponding switches as described above. The sensor signals are particularly used to determine the resulting voltage of the piezoelectric elements 10, 20 and 30, resp. 40, 50 and 60 from measuring points 600 resp. 610 and the charging and discharging currents from measuring point 620. The control unit D and the activation IC E are used to combine both kinds of signals in order to perform an interaction of both.

As is indicated in Fig. 2, the control unit D and the activation IC E are connected to each other by means of a parallel bus 840 and additionally by means of a serial bus 850. The parallel bus 840 is particularly used for fast transmission of control signals from control unit D to the activation IC E, whereas the serial bus 850 can be used for slower data transfer.

In Fig. 4 some components of general significance are indicated, which the activation IC E comprises: a logic circuit 800, RAM memory 810, digital to analog converter system 820 and comparator system 830. Furthermore, it is indicated that the fast parallel bus 840 (used for control signals) is connected to the logic circuit 800 of the activation IC E, whereas the slower serial bus 850 is connected to the RAM memory 810. The logic circuit 800 is connected to the RAM memory 810, to the comparator system 830 and to the signal lines 410, 420, 430, 440, 450 and 460; 510 and 520; 530; 540, 550 and 560. The RAM memory 810 is connected to the logic circuit 800 as well as to the digital to analog converter system 820. The digital to analog converter system 820 is further connected to the comparator system 830. The comparator system 830 is further connected to the sensor lines 700 and 710; 720; 730, 740 and 750 and -as already mentioned- to the logic circuit 800.

The above listed components may be used in a charging procedure for example as follows:

By means of the control unit D a particular piezoelectric element 10, 20, 30, 40, 50 and/or 60 is determined which is to be charged to a certain target voltage. Then, without the inventive method, for example firstly the value of the target voltage (expressed by a digital number) would be transmitted to the RAM memory 810 via the slower serial bus 850. Later or simultaneously, a code corresponding to the particular piezoelectric element 10, 20, 30, 40, 50 and/or 60 which is to be selected and the address of the transmitted voltage within the RAM memory 810 would be transmitted to the logic circuit 800 via the parallel bus 840. Later on, a strobe signal would be sent to the logic circuit 800 via the parallel bus 840 which gives the start signal for the charging procedure.

The start signal firstly causes the logic circuit 800 to pick up the digital value of the target voltage from the RAM memory 810 and to put it on the digital to analog converter system 820 whereby at one analog exit of the converters 820 the desired voltage occurs. Moreover, said analog exit (not shown) is connected to the comparator system 830. In addition hereto, the logic circuit 800 selects either measuring point 600 (for any of the piezoelectric elements 10, 20 or 30 of the first group G1) or measuring point 610 (for any of the piezoelectric elements 40, 50 or 60 of the second group G2) to the comparator system 830. Resulting thereof, the target voltage and the present voltage at the selected piezoelectric element 10, 20, 30, 40, 50 or 60 are compared by the comparator system 830. The results of the comparison, i.e., the differences between the target voltage and the present voltage, are transmitted to the logic circuit 800. Thereby, the logic circuit 800 can stop the procedure as soon as the target voltage and the present voltage are equal to one another.

Secondly, the logic circuit 800 applies a control signal to the branch selector switch 11, 21, 31, 41, 51 and/or 61 which corresponds to any selected piezoelectric element 10, 20, 30, 40, 50 and/or 60 so that the switch becomes closed (all branch selector switches 11, 21, 31, 41, 51 and/or 61 are considered to be in an open state before the onset of the charging procedure within the example described). Then, the logic circuit 800 applies a control signal to the charging switch 220 so that the switch becomes closed. Furthermore, the logic circuit 800 starts (or continues) measuring any currents occurring on measuring point 620. Hereto, the measured currents are compared to any predefined maximum value by the comparator system 830. As soon as the predefined maximum value is achieved by the detected currents, the logic circuit 800 causes the charging switch 220 to open again.

Again, the remaining currents at measuring point 620 can be detected and compared to any predefined minimum value. As soon as said predefined minimum value is achieved, the logic circuit 800 can cause the charging switch 220 to close again and the procedure may start once again.

The closing and opening of the charging switch 220 is repeated as long as the detected voltage at measuring point 600 or 610 is below the target voltage. As soon as the target voltage is achieved, the logic circuit stops the continuation of the procedure.

The discharging procedure takes place in a corresponding way: Now the selection of the piezoelectric element 10, 20, 30, 40, 50 and/or 60 is obtained by means of the group selector switches 310 resp. 320, the discharging switch 230 instead of the charging switch 220 is opened and closed and a predefined minimum target voltage is to be achieved.

As mentioned, there is a more or less significant delay between any activation onset (i.e., the start of a charging or discharging procedure of a piezoelectric element 10, 20, 30, 40, 50 and/or 60) and the corresponding injection onset (generally not before any corresponding target voltage is achieved). Said delay depends on the values of an initial voltage Uᵢₙᵢ, on a target voltage Uₜₐᵣ and on a gradient dU/dt, which again all can depend on various parameters, in particular on the piezoelectric element 10, 20, 30, 40, 50 and/or 60 as well as on the rail pressure pᵣₐᵢₗ within the fuel injection system and on the temperature of the piezoelectric elements and the fuel type as well as on the hydraulic construction itself.

Further, the activation voltage required for homogenous actions (i.e., actions of a piezoelectric element, which are in principle the same -for example opening an double acting control valve from a first closed position-, but, however, vary in detail due to dependencies on further parameters, such as manufacturing differences) of the piezoelectric elements 10, 20, 30, 40, 50 and/or 60 is considerably higher at high rail pressure pᵣₐᵢₗ than at low rail pressure (a difference of up to 40 V can be expected for rail pressures pᵣₐᵢₗ in the range from 300 to 1600 bar). Hence, for example, there is an ultimately rail pressure-dependent time difference until the target voltage is reached even for homogenous actions of any individual piezoelectric element 10, 20, 30, 40, 50 and/or 60 (in the aforementioned example, assuming a gradient of 1 to 2 V/*µ*s, the result is an operating point dependence of up to 40 *µ*s for such homogenous actions).

For these reasons, taking into account a fixed time delay between the attainment of the target voltage and the onset of injection even for each homogenous action of each piezoelectric element 10, 20, 30, 40, 50 and/or 60, would result in a more or less inexact point of time for the injection onset. Hence, as according to the invention, the corresponding time delays are determined in accordance with the concrete situation in which they are to be taken into account.

In order to do so, the difference between the initial value and the target value of the voltage is calculated and, according to Fig. 5, the absolute value of their difference is calculated. As mentioned before, the initial and target voltages depend on several conditions, including, inter alia, the rail pressure pᵣₐᵢₗ and the temperature.

The absolute difference of both voltages can be divided by the gradient's absolute value. This can result in a time T_{calc} that corresponds to the expected time for charging or discharging the piezoelectric element(s) from the initial voltage to the target voltage.

This time T_{calc} can be used to correct the time for the onset of the activation in a way that, taking into account a fixed time delay between the attainment of the target voltage and the onset of the injection, the precision of the onset of this injection is significantly increased. Fig. 5 is one embodiment of many possible embodiments that can be implemented according to the present invention taking into account the initial and the target voltage, the voltage gradient, as well as, the rail pressure pᵣₐᵢₗ and/or the temperature. In any possible embodiment of the present invention, the present invention provides for a correction of the onset of the activation, thereby in part providing for an increased precision in the onset of the injection.

It is to be understood, that the invention is explained above by way of example only. Hence, further implementations are also possible.

## Claims

1. Method for controlling system parameters, particularly in fuel injection systems, **characterized in that**
a) first system parameters, in particular a voltage across a piezoelectric element (10, 20, 30, 40, 50 and/or 60), are modified by a modification means (A, D, E) corresponding to at least one predefined target value;
b) the at least one predefined target value is calculated by a calculation means, the calculation means accounting for a desired action of each controlled element (10, 20, 30, 40, 50 and/or 60), preferably a desired extension of each piezoelectric element (10, 20, 30, 40, 50 and/or 60), as well as with a second system parameters on which the at least one predefined target value depends;
c) a modification time required to finish modification of the first system parameters is determined by the modification means, the first system parameters being affected by homogeneous actions corresponding to an at least one target value dependence on the second system parameters; and
d) a correction means determines and compensates for any determined time differences.

2. Method as according to claim 1, **characterized in that**
a) piezoelectric elements (10, 20, 30, 40, 50 and/or 60) are used as actuators in fuel injection nozzles of a fuel injection system;
b) the first system parameters correspond to the voltages across the piezoelectric elements (10, 20, 30, 40, 50 and/or 60); and
c) the target values correspond to target voltages across the piezoelectric elements (10, 20, 30, 40, 50 and/or 60).

3. Method as according to one of the foregoing claims, **characterized in that** the first and second system parameters further comprise a fuel pressure (pᵣₐᵢₗ) and a temperature of the piezoelectric element (10, 20, 30, 40, 50 and/or 60) and a fuel type.

4. Method as according to one of the foregoing claims,
**characterized in that**
a) the modification time required by the modification means to finish the first system parameters is predetermined in correspondence with each of the at least one predefined target value by the correction means; and
b) an onset of the modification means modifying the first system parameters is determined by the correction means.

5. Method as according to one of the foregoing claims, **characterized in that** a modification gradient of any of the first system parameters relative to time (dU/dt) is assumed to be constant.

6. Method as according to one of the foregoing claims, **characterized in that** the modification time required by the modification means to finish the first system parameters is predetermined by the correction means by determining a voltage difference between a corresponding initial voltage and the at least one predefined target value by the modification gradient (dU/dt).

7. Method as according to one of the foregoing claims, **characterized in that** more than one modification gradients (dU/dt) are provided.

8. Apparatus for controlling system parameters, particularly in fuel injection systems and in particular eligible for usage with a method as according to one of the foregoing claims, **characterized in that**
a) a modification means (A, D, E) is implemented for modifying at least one first system parameter, preferably at least one voltage across at least one piezoelectric element (10, 20, 30, 40, 50 and/or 60), corresponding to each of the piezoelectric elements respective to at least one of the predefined target values;
b) a calculation means is implemented for the calculation of the at least one predefined target value, preferably the calculation means considers a respective desired action for each controlled element or each of the piezoelectric elements (10, 20, 30, 40, 50 and/or 60), and/or at least one second system parameter on which the at least one predefined target values depend; and
c) a correction means is implemented for compensating any time differences, the any time differences being required to finish modification of the at least one first system parameters, the at least one first system parameters being adjustable to account for homogeneous actions corresponding to any dependence of the at least one predefined target values on the second system parameters.
